# EUROPEAN PATENT SPECIFICATION

(11) **EP 0 323 665 B1**
(45) Date of publication and mention of the grant of the patent: **06.04.1994**
(21) Application number: 88202932.5
(22) Date of filing: 19.12.1988
(51) Int. Cl.: B01D 1/26, A23B 7/00, A23L 2/10

(54) **Plant for concentrating an alimentary product with a liquid content**
Anlage zur Konzentrierung eines flüssigen Nahrungsmittels
Installation pour la concentration d'un produit alimentaire liquide

(30) Priority: 31.12.1987 IT 2329187
(43) Date of publication of application: 12.07.1989
(73) Proprietor: MANZINI COMACO S.P.A., I-43100 Parma (IT)
(72) Inventor: Sommi, Franco, I-43100 Parma (IT); Arelli, Pier Luigi, I-43100 Parma (IT)
(74) Representative: Fusina, Gerolamo

(56) References cited:
- FR-A- 880 098
- FR-A- 1 264 970
- FR-A- 2 540 512
- US-A- 2 330 221
- US-A- 2 800 955

## Description

The object of the present invention is a plant for concentrating an alimentary product with a liquid content, such as, e.g., a vegetable product (fruit, vegetables, and so forth).

Plants for concentrating tomato are known, which comprise a heating section which heats tomatoes to such a temperature as to minimize the enzymatic activity which, as known, once that tomato is broken, tends to destroy the pectins contained in the same tomato, causing a loss in tomato consistency.

Such plants furthermore comprise a section for refining the product coming from the heating section, in which refining section the seeds and peels contained in semi-finished tomato are removed.

Such plants are furthermore provided with a concentration section, which comprise a series of evaporation units, through which the tomato is made run, which comes from the refining, for the true concentration of said tomato. One of said evaporation units is connected to a steam source, and the evaporation units are furthermore connected with one another in such a way that the steam generated by the evaporation of tomato in one of them constitutes the heating fluid for the following evaporation unit.

In order to decrease the amount of heat which is necessary for the operation of the evaporator units, and in order to decrease the organoleptic decay of tomato, the pressure existing inside the evaporation chambers is reduced to a minimum value, so as to decrease the boiling temperature of tomato.

In spite of that, the energy consumption, in terms of consumption of steam coming from the steam source, is still high.

The route followed to date in order to reduce the above said energy consumption was that of increasing the number of the evaporation units, i.e., of increasing the number of the effects in the evaporation section. US-A-2 800 955 discloses a method and apparatus for evaporating solutions to obtain a constant density concentrate through a simple or multiple effect evaporation, with or without removal of vapor.

It should anyway be stressed that this solution causes increases in the investment cost, which not always are justified by the operations savings deriving from the reduction in steam consumptions.

The purpose of the present invention is to reduce the energy consumption by the concentration unit, without resorting to an increase in the number of the evaporation units .

Such a purpose is achieved by providing a plant as claimed in claim 1. This plant comprises an initial section of product heating, and an end section of product concentration, which is equipped with a series of evaporator units through which the product flows in succession, and connected with each other in such a way that the steam generated in one of them by the evaporation of the above said product constitutes the heating fluid for the following evaporator, in which said initial product heating section is provided with at least one evaporator unit for pre-concentrating, besides heating, the product, fed with steam by a steam source and connected to at least one of said evaparator units of the end concentration section in such a way that the steam generated inside said initial evaporator unit owing to the evaporation of the product constitutes the heating fluid for said one of said evaporator units of the end concentration section.

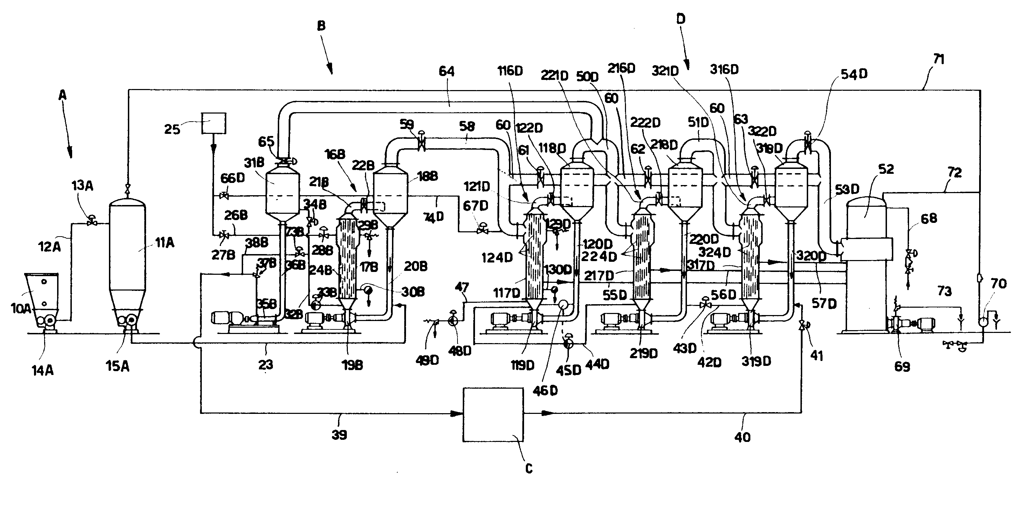

Hereinunder an exemplifying, non-limitative form of practical embodiment of the present invention is disclosed, which is illustrated in the hereto attached drawing table, whose single figure shows a schematic view of a plant according to the present invention.

The plant shown, intended for preparing tomato concentrate, comprises an "A" feeding section, a "B" heating/pre-concentration section, a "C" refining section, and a "D" concentration section.

The "A" feeding section comprises a hopper 10A and a de-aerator 11A connected by a duct 12A on which a valve 13A is installed. At the outlet of the hopper 10A and of the de-aerator 11A, two respective axial pumps 14A and 15A are installed.

The "B" heating/pre-concentration section comprises an evaporation unit 16B. The evaporation unit 16B is equipped with a heat exchanger 17B of tube-bundle type, and a steam separator 18B (which substantially is a vessel inside which the separation of the liquid phase from the steam phase occurs). The bottom side of the heat exchanger is connected to the delivery end of recycle means, such as a centrifugal pump 19B, the intake end of which is connected to a duct 20B which puts the pump 19B in communication with the bottom side of the steam separator 18B. A duct 21B puts then in communication the overhead side of the heat exchanger 17B with the steam separator 18B; on the duct 21B, a valve 22B is provided. The duct 20B communicates with the outlet of the pump 15A through a duct 23. The heat exchanger 17B comprises in its interior a tube bundle 24B; inside said tubes tomato flows, and their interior is connected at an and to the delivery end of the pump 19B, and at its other end to the duct 21B.

The external surface of the tubes is lapped by steam coming from a steam source constituted by a kettle 25 connected to the evaporator 17B through a duct 26B, in which an on-off valve 27B and a regulator valve 28B are installed. Also connected to the heat exchanger 17B are a safety valve 29B and a condensate drain duct 30B. Besides the evaporation unit 16B, the "B" section of the plant comprises a further steam separator 31B, which is connected to the bottom side of the heat exchanger 17B, in communication with the interior of the tubes 24B, through a duct 32B; on such a duct 32B, an extraction pump 33B is installed in the nearby of the heat exchanger 17B, and furthermore a valve 34B is installed downstream the pump 33B. The bottom side of the steam separator 31B is connected to the intake end of an axial pump 35B by means of a duct 36B. The delivery end of the pump 35B is connected to the "C" refining section through a counter-pressure valve 37B, and by means of a duct 39. From the duct 32B, a duct 38B branches off, on which a valve 73B is installed, which is directly connected to the refining section C by the duct 39.

The "C" refining section performs the function of removing the seeds and the peels contained in the semi-finished tomato, and is neither described nor illustrated herein, but is simply schematically shown by means of a block, in that it is well known from the specific art.

The "D" concentration section comprises three evaporation units nearly identical to the evaporation unit 16B. For such a reason, such evaporation units are not disclosed in detail, and for them the same reference numerals are used, which were used for the evaporation unit 16B, preceded by the numeral "1" for the first unit from left, by the numeral "2" for the second unit from left, and by the numeral "3" for the third unit from left, viewing at the figure, and followed by the letter "D".

The duct 320D of the evaporation unit 316D is connected to the outlet of the "C" refining section by means of a duct 40, on which a valve 41 is installed. The bottom side of the heat exchanger 317D of the evaporation unit 316D is connected to the duct 220D of the evaporation unit 216D through a duct 42D on which a valve 43D is installed, with the interior of the tube bundle 324D being therefore put in communication with the duct 220D. The bottom side of the heat exchanger 217D of the evaporation unit 216D is connected to the bottom side of the heat exchanger 117D of the evaporation unit 116D by a duct 44D, on which an extraction pump 45D is installed, with the interior of the tube bundle 224D being thus put in communication with the interior of the tube bundle 124D; the pump 45D is piloted by a refractometer 46D connected to the duct 120D and to the bottom side of the heat exchanger 117D of the evaporation unit 116D, it being therefore in communication with the interior of the tuble bundle 124D. The bottom side of the above said heat exchanger 117D is also in communication with the outside through a duct 47D on which an extraction pump 48D is installed, downstream which a counter-pressure valve 49D is installed. The overhead side of the steam separator 118D of the evaporation unit 116D is connected to the heat exchanger 217D of the evaporation unit 216D by means of a duct 50D, with said steam separator 118D being thus put in communication with the external side of the tube bundle 224D. In an analogous way, the overhead side of the steam separator 218D of the evaporation unit 216D is connected to the heat exchanger 317D of the evaporation unit 316D by means of a duct 51D, with said steam separator 218D being thus put in communication with the external side of the tube bundle 324D. The steam separator 318D communicates, on the contrary, with a mixture-condenser 52 by means of a duct 53D, on which a valve 54D is installed. The external side of the tube bundles 124D, 224D, 324D of the three respective heat exchangers 117D, 217D, 317D of the three evaporation units 116D, 216D, 316D communicates with the condenser 52 through three respective ducts 55D, 56D, 57D. To the mixture-condenser 52 a duct 68 is connected for feeding water to the condenser; as well-known, such water is necessary for the same condenser to operate. To the condenser 52, a centrifugal pump 69 is connected, for the purpose of removing the condensate, and the cooling water from the same condenser.

The overhead side of the steam separator 18B of the unit 16B of the "B" heating/pre-concentration section is in communication with the external side of the tube bundle 124D of the heat exchanger 117D of the evaporation unit 116D of the "D" concentration section by means of a duct 58 on which a valve 59 is installed; such an overhead side of the steam separator 18B is also in communication with the condenser 52 by means of a duct 60, on which three valves 61, 62 and 63 are installed in succession.

The overhead side of the steam separator 31B of the "B" heating/pre-concentration section is in communication with the external side of the tube bundle 224D of the heat exchanger 217D of the evaporation unit 216D of the "D" concentration section by means of a duct 64 leading to duct 50D; the above-said overhead side of the steam separator 31B is in communication with the above-said duct 64 through a valve 65.

The kettle 25 is also in communication with the external side of the tube bundle 124D of the heat exchanger 117D of the evaporation unit 116D of the"D" concentration section by means of a duct 74D on which a first, on-off valve 66D, and a second, regulation valve 67D are installed.

The plant furthermore comprises a vacuum pump 70 connected to the de-aerator 11A of the "A" feeding section through a duct 71, and also connected to the condenser 52 by means of a duct 72 branching off from the duct 71.

Hereinunder the operation of the plant according to the so-said "HOT BREAK" method, and under steady-state operating conditions, is disclosed.

In such a situation, the valves 66D, 73B, 61, 62 and 63 are closed, whilst all of the other disclosed and illustrated valves are open.

The tomatoes to be processed, arriving from a sorting table - not depicted in the figure - is connected inside the hopper 10A, and from there is sent by the pump 14A through the duct 12A into the de-aerator 11A; while tomatoes flow through the pump 14A, a rough crushing thereof already takes place. Inside the de-aerator, tomato is de-aerated thanks to the vacuum pump 70; it therefore comes to be under vacuum at room temperature. From the de-aerator 11A, tomato is sent by the pump 15A through the duct 23 into the duct 20B of the evaporation unit 16B; while running through the pump 15A, tomatoes undergo a further crushing.

Once that it has entered the duct 20B, tomato is made to circulate in closed loop by the pump 19B, in the direction as shown by the arrow, inside the duct 20B, the inner side of the tube bundle 24B of the heat exchanger 17B, inside the duct 21B, and inside the steam separator 18B. The external side of the tube bundle 24B is lapped by the steam coming from the kettle 25 through the duct 26B. During this processing step, tomatoes undergo a true grinding by the pump 19B and are furthermore heated inside the heat exchanger 17B to a high temperature; then, they evaporate inside the steam separator 18B at such a temperature. A portion of tomato circulating inside said closed loop is intaken by the pump 33B, and is sent, through the duct 32B, to the steam separator 31B, inside which it cools, with a further evaporation being anyway obtained. From steam separator 31B, tomato is sent by the pump 35B, through the duct 39, to the "C" refining section.

Inside such a refining section, as already said, seeds and peels are removed from the so semi-finished tomato. From the "C" refining section, the so- refined tomato comes to the duct 320D of the evaporation unit 316D.

Herein, exactly the same process takes place, as already disclosed for the group 16B; i.e., tomato is made to circulate in closed loop by the pump 319D along the duct 320D, along the tube bundle 324D of the heat exchanger 317D, in which it is heated, along the duct 321D, and inside the steam separator 318D inside which it evaporates.

A portion of tomato circulating inside such unit 316D comes, through the duct 42D, into the duct 220D of the evaporation unit 216D, wherein exactly the same process takes place, which occurs inside the evaporation unit 316D, i.e., tomato circulates in closed loop, thanks to the pump 219D, along the duct 220D, along the tube bundle 224D of the heat exchanger 217D wherein tomato is heated, along the duct 221D, and through the steam separator 218D, inside which tomato evaporates. A portion of tomato circulating inside said unit 216D is intaken by the pump 45D and is sent through the duct 44D into the tube bundle 124D of the heat exchanger 117D of the evaporation unit 116D. Inside such evaporation unit 116D, the same process takes place once more, which occurs in the other evaporation units, i.e., the pump 119D circulates tomato over a closed loop through the tube bundle 124D wherein tomato is heated, through the duct 121D, through the steam separator 118D, wherein it evaporates, and through the duct 120D. The so-processed tomato is intaken by the pump 48D through the duct 47, and is sent to the outlet of the plant.

It should be underlined that the steam which is generated inside the steam separator 18B of the evaporation unit 16B comes, through the duct 58, into the heat exchanger 117D, wherein it laps the outer walls of the tubes of the tube bundle 124D, acting as a heating fluid for such a heat exchanger of the evaporation unit 116D. The steam which is produced inside the steam separator 118D of this latter evaporation unit 116D comes, through the duct 50D, into the heat exchanger 217D, and is combined with the steam which is produced inside the steam separator 31B of the "B" heating/pre-concentration section, and which precisely comes into the heat exchanger 217D by flowing through the ducts 64 and 50D; such combined steam streams lap the outer walls of the tubes of the tube bundle 224D, acting as the heating fluid for such a heat exchanger of the evaporation unit 216D. The steam which is generated inside the steam separator 218D of the evaporation unit 216D comes, through the duct 51D, into the heat exchanger 317D of the evaporation unit 316D, inside which it laps the outer walls of the tubes of the tube bundle 324D, forming the heating fluid for such a heat exchanger of the evaporation unit 316D. Finally, the steam which is produced inside the steam separator 318D comes, through the duct 53D, into the condenser 52.

To the condenser 52 also the condensate comes, which is generated inside the heat exchangers 117D, 217D, 317D, respectively through the ducts 55D, 56D, 57D.

All the condensate which collects inside the condenser 52 is intaken by the pump 69 and is discharged through a duct 73.

The condensate from the heat exchanger 17B is sent, on the contrary, to the kettle 25 through the duct 30B.

When the plant operates according to the "COLD BREAK" method, the valve 73B is opened, whilst the valve 34B remains closed. This arrangement causes, as compared to the above disclosed procedure, the tomato intaken by the pump 33B from the unit 16B to be directly sent to the "C" refining section through the ducts 38B and 39. Therefore, the step of tomato cooling and evaporation inside the steam separator 31B is skipped, and the steam contribution by said steam separator to the heat exchanger 217D of the evaporation unit 216D is therefore eliminated.

During the initial step in which tomato has not arrived yet to the three evaporator units 116D, 216D, 316D, but is already circulating inside the evaporator unit 16B, the valves 61, 62, 63 are open, in order to directly discharge the steam stream coming from the steam separator 18B into the condenser 52.

In the end step, in which no tomato is any longer circulating inside the evaporator unit 16B, but tomato is still circulating inside the evaporator unit 116D, the valve 27B is closed, and, on the contrary, the valve 66D is opened, so as to feed the heat exchanger 117D of the evaporator unit 116D with steam directly coming from the kettle 25, with the steam missing, which, under steady-state operating conditions, comes from the steam separator 18B; the condensate is drained through the duct 130D.

Inside the "B" and "D" sections of the plant, tomato flows inside an environment under a much lower pressure than atmospheric, thanks to the vacuum pump 70.

Due to such a reason, tomato evaporates inside the steam separators at temperatures lower than 100°C. Obviously, owing to the way the plant is constructed, the evaporation temperature of tomato inside the steam separator 18B is higher than the tomato evaporation temperature inside the steam separator 31B, which in its turn is higher than, or equal to, the tomato evaporation temperature inside the steam separator 118D, which is its turn is higher than the tomato evaporation temperature inside the steam separator 218D, which is its turn is higher than the tomato evaporation temperature inside the steam separator 318D.

Coming now to general considerations, by referring to the "HOT BREAK" method, in the "B" heating/pre-concentration section the grinding of tomatoes is completed, tomato is pre-heated to a high temperature in order to reduce the enzymatic activity mentioned in the introduction, and is pre-concentrated in two concentrating steps, thanks to the evaporation of a portion of the liquid contents of tomato inside the two steam separators 18B and 31B. In the "D" concentration section, the true concentration of tomato takes place in the three successive concentration steps relevant to the three evaporation units 316D, 216D, 116D.

Besides performing the above mentioned functions, the "B" section supplies energy, as steam, to the "D" section, thanks to the connections between the steam separator 18B and the heat exchanger 117D and between the steam separator 31B and the heat exchanger 217D.

In other words, in a so-structured plant , the "B" section, besides performing a function of tomato pre-heating, in order to reduce the enzymatic activity, as it occurs in the plants known from the prior art, also performs a function of tomato pre-concentrating. Furthermore, the "B" section makes it possible a four-effects evaporation system to be accomplished, whilst in the prior art, with three evaporation units of the true concentration section, a three-effects evaporation system would be obtained.

This latter feature makes it therefore possible the energy consumption by the concentration plant to be reduced, without it being necessary to increase the number of the evaporation units of the true concentration section.

When the "COLD BREAK" method is taken into consideration, relatively to what above said, the contribution - both in terms of pre-concentration, and in terms of energy saving - of the steam separator 31B is lost, in that said steam separator 31B is inactive, and therefore, one concentration step, as well as the steam contribution by this steam separator to the heat exchanger 217D, are absent. The hereinabove stressed advantages over the prior art are anyway maintained.

The system of recirculation provided in each evaporation unit makes it possible the evaporation temperature to be immediately reached by the tomato entering the same evaporation unit, which get mixed with tomato which is already at said evaporation temperature.

The herein disclosed and illustrated valves, which intercept the tomato streams inside the ducts, or the steam streams, make it clearly possible the flow-rate of said streams to be limited, in order to adjust the flow-rates and the temperatures at their most suitable values. In particular, the refractometer 46D pilots the pump 45D as a function of the concentration of tomato in the last concentration step, i.e., inside the evaporation unit 116D, so as to decrease, or increase, the flow-rate of tomato as a function of the concentration of the same tomato.

The fact that the evaporator units are identical to one another is very advantageous as regards the homogeneity of operations, as well as the maintenance.

Clearly, the supply of variants and additions to the hereinabove disclosed and illustrated plant is possible.

In particular, no limitations exist as regards the number of the concentration steps, as well as the number of the effects both of the heating/pre-concentration section and of the concentration section.

The evaporation system of the hereinabove disclosed plant is a multiple-effect, mixed-type evaporation system, but, by means of obvious modifications in the connections between the evaporation units, one can think as well of an evaporation system still of multiple-effect type, but in co-current or in counter-current flow.

The plant may not contain as well the element (the steam separator 31B) which carries out the cooling and evaporation of the tomato coming from the evaporator unit of the heating/pre-concentration section.

Each evaporation unit, instead of containing a heat exchanger and a steam separator, may be equipped with one single evaporator in place of these two elements.

Not necessarily each evaporation unit must be of the type with recirculation in closed loop, but, more simply, one single pass of tomato through the same evaporator unit can be provided. Obviously, such a simple structure of the evaporation unit is not herein disclosed, in that it will be obvious to anybody skilled the art.

Clearly, the hereinabove disclosed operating elements can be replaced by functionally equivalent elements; this is true, e.g., for the pumps, for the condenser, as well as for the de-aerator.

## Claims

1. Plant for concentrating a flow of a vegetable product having a liquid content, such as tomatoes, comprising a section (B) of product heating, an intermediate section (C) for receiving and refining the product from said section (B) by removing peels and/or seeds from the product for producing juice and a section (D) of product concentration, this latter section (D) being provided with a series of at least two evaporator units (116D; 216D; 316D) for receiving and concentrating the juice from said intermediate section (C) and through which the product flows in succession, said evaporator units (116D; 216D; 316D) of the section (D) of product concentration being connected with one another in such a way that the steam generated in one of them by evaporation of the above said product constitutes the heat fluid of the successive evaporator of said series, characterised in that said section (B) of product heating includes an evaporator unit (16B) for receiving product and wherein the product is heated by steam to a temperature for concurrently eliminating enzymatic activity and evaporating a portion of the product for producing a pre-concentrated product, the section (B) of product heating and the section (D) of product concentration are connected such that steam from the evaporator (16B) of said section (B) of product heating is conveyed to and heats at least one of the evaporators (116D; 216D; 316D) of said section (D) of product concentration, and a de-aerator (11A) is connected to the evaporator (17B) of said section (B) of product heating wherein said de-aerator (11A) receives the product prior to discharging the product to said evaporator (17B) of said section (B) of product heating.

2. The plant according to claim 1, characterised by comprising a vacuum means (70) connected to the de-aerator (11A) of a feeding section (A) communicating with said section (B) of product heating for generating a vacuum inside said evaporator units (16B; 116D; 216D; 316D) of the section (B) of product heating and of the section (D) of product concentration.

3. The plant according to claim 1, characterised in that said evaporator unit (16B) of said section (B) of product heating and each of said evaporator units (116D; 216D; 316D) of said section (D) of product concentration comprises a heat exchanger (17B; 117D; 217D; 317D) and a steam separator (18B; 118D; 218D; 318D).

4. The plant according to claim 1, characterised in that said section (B) of product heating further comprises a cooling element (31B) connected to the evaporator (17B) of said section (B) of product heating for cooling the product and for feeding said pre-concentrated product to said intermediate section (C) for refining said pre-concentrated product, and wherein said cooling element (31B) also is connected to an evaporator (117D) of said section (D) of product concentration for discharging steam thereto for heating said evaporator (117D) of said section (D) of product concentration.

5. The plant according to claim 4, characterised in that said cooling element is a steam separator (31B).

6. The plant according to claim 5, characterised in that said section (B) of product heating comprises a valve means (34B) for isolating said cooling element (31B) from said section (B) of product heating.

7. The plant according to claim 6, characterised by further comprising a first connection (64) for conveying the steam from said evaporator (17B) of said section (B) of product heating to the evaporator (117D) of said section (D) of product concentration which last received the flow of juice.

8. The plant according to claim 7, characterised in that said evaporator (17B) of said section (B) of product heating and evaporators (117D; 217D; 317D) of said section (D) of product concentration each comprise a closed loop recirculation means for recirculating the product (19B, 20B, 21B, 24B; 119D, 120D, 121D, 124D; 219D, 220D, 221D, 224D; 319D, 320D, 321D, 324D).

## Patentansprüche

1. Anlage zur Konzentrierung eines Strome eines flüssigen Nahrungsmittels, wie z.B. Tomaten, umfassend einen Bereich (B) der Produkterhitzung, einen Zwischenbereich (C) zur Aufnahme und Läuterung des Produktes aus Bereich (B), in dem Schalen und/oder Samen von dem Produkt entfernt werden zur Herstellung eines Saftes, und einen Bereich (D) der Produktkonzentrierung, welcher letztere Bereich (D) mit einer Serie von wenigstens zwei Verdampfereinheiten (116D, 216D, 316D) zur Aufnahme und Kouzentrierung das Saftes aus dem Zwischenbereich (C) ausgebildet ist und durch welche das Produkt aufeinanderfolged fließt, wobei die Verdampfereinheiten (116D, 216D, 316D) des Bereiches (D) der Produktkonzentration miteinander in derartiger Weise verbunden sind, daß der in einer von ihnen durch Verdampfung des oben genannten Produktes gebildete Dampf das Erhitzungsfluid des darauffolgenden Verdampfers dieser Serie bildet, dadurch gekennzeichnet, daß der Bereich (B) der Produkterhitzung eine Verdampfereinheit (16B) zur Aufnahme des Produktes umfaßt und worin das Produkt durch Dampf auf eine Temperatur zur gleichzeitigen Eliminierung von enzymatischer Aktivität und Verdampfen von einem Teil des Produktes zur Herstellung eines vorkonzentrierten Produktes erhitzt wird, wobei der Bereich (B) der Produkterhitzung und der Bereich (D) der Produktkonzentrierung so miteinander verbunden sind, daß der Dampf von dem Verdampfer (16B) des Bereiches (B) der Produkterhitzung zu wenigstens einem der Verdampfer (116D, 216D, 316D) des Bereiches (D) der Produktkonzentrierung geführt ist und diesen erhitzt und ein Entlüfter (11A) an den Verdampfer (17B) des Bereiches (B) der Produkterhitzung gebunden ist, worin der Entlüfter (11A) Produkt vor dem Austragen des Produktes an den Verdampfer (17B) des Bereiches (B) der Produkterhitzung zugeführt erhält.

2. Anlage nach Anspruch 1, dadurch gekennzeichnet, daß sie ein Vakuummittel (70) umfaßt, welches an den Entlüfter (11A) eines Zuführungsbereiches (A), welcher mit dem Bereich (B) der Produkterhitzung in Vebindung steht, gebunden ist, um ein Vakuum in den Verdampfereinheiten (16B, 116D, 216D, 316D) des Bereiches (B) der Produkterhitzung und des Bereiches (D) des Produktkonzentrierung zu bilden.

3. Anlage nach Anspruch 1, dadurch gekennzeichnet, daß die Verdampfereinheiten (16B) des Bereiches (B) der Produkterhitzung und jede der Verdampfereinheiten (116D, 216D,316D) des Bereiches (D) der Produktkonzentrierung einen Wärmetauscher (17B, 117D, 217D, 317D) und einen Dampfseperator (18B, 118D, 218D, 318D) umfassen.

4. Anlage nach Anspruch 1, dadurch gekennzeichnet, daß der Bereich (B) der Produkterhitzung weiters ein Kühlelement (31B) umfaßt, welches an den Verdampfer (17B) des Bereiches (B) der Produkterhitzung zur Kühlung des Produktes und zur Einspeisung des vorkonzentrierten Produktes in den Zwischenbereich (C) zur Läuterung des vorkonzentrierten Produktes gebunden ist, und worin das Kühlelement (31B) auch an einen Verdampfer (117D) des Breiches (D) der Produktkonzentrierung gebunden ist, um den Dampf dahin zur Erhitzung des Verdampfers (117D) des Bereiches (D) der Produktkonzentrierung auszutragen.

5. Anlage nach Anspruch 4, dadurch gekennzeichnet, daß des Kühlelement ein Dampfseparator (31B) ist.

6. Anlage nach Anspruch 5, dadurch gekennzeichnet, daß der Bereich (B) dar Produkterhitzung ein Ventil (34B) zur Isolierung des Kühlelementes (31B) von dem Bereich (B) der Produkterhitzung umfaßt.

7. Anlage nach Anspruch 6, dadurch gekennzeichnet, daß sie weiters eine erste Verbindung (64) zum Zuführen des Dampfes von dem Verdampfer (17B) des Bereiches (B) der Produkterhitzung zu dem Verdampfer (117D) des Bereiches (D) der Produktkonzentrierung, welcher letztere den Saftstrom aufnimmt, umfaßt.

8. Anlage nach Anspruch 7, dadurch gekennzeichnet, daß der Verdampfer (17B) des Bereiches (B) der Produkterhitzung und Verdampfer die (117D, 217D, 317D) des Bereiches (D) der Produktkonzentrierung jeweils einen geschlossenen Kreislauf für den Rücklauf des Produktes (19B, 20B, 21B, 24B, 119D, 120D, 121D, 124D, 219D, 220D, 221D, 224D, 319D, 320D, 321D, 324D) aufweist.

## Revendications

1. Installation de concentration d'un flux de produit végétal ayant une certaine teneur en liquides, tel que des tomates, comprenant une section (B) de chauffage du produit, une section intermédiaire (C) destinée à recevoir et à raffiner le produit arrivant de la section (B), en retirant les peaux et/ou pépins du produit pour produire du jus et une section (D) de concentration du produit, cette dernière section (D) étant équipée d'une série d'au moins deux évaporateurs (116D ; 216D ; 316D) destinés à recevoir et à concentrer le jus issu de la section intermédiaire (C) et à travers lesquels le produit s'écoule de façon successive, les évaporateurs (116D ; 216D; 316D) appartenant à la section (D) de concentration du produit étant reliés les uns aux autres de telle sorte que la vapeur engendrée dans l'un d'eux, par évaporation du produit mentionné ci-dessus, constitue le flux de chaleur de l'évaporateur lui faisant suite dans la série, caractérisée en ce que la section (B) de chauffage du produit comprend un évaporateur (16B) destiné à recevoir le produit et dans lequel le produit est chauffé par vapeur à une certaine température afin, à la fois, d'éliminer l'activité enzymatique et de faire s'évaporer une partie du produit afin de produire un produit pré-concentré, la section (B) de chauffage du produit et la section (D) de concentration du produit sont reliées de telle sorte que de la vapeur provenant de l'évaporateur (16B), appartenant à la section (B) de chauffage de produit, est transportée vers et chauffe au moins un des évaporateurs (116D ; 216D ; 316D) appartenant à la section (D) de concentration du produit, un désaérateur (11A) est relié à l'évaporateur (17B) de la section (B) de chauffage de produit, le désaérateur (11A) recevant le produit avant d'évacuer le produit vers l'évaporateur (17B) de la section (B) de chauffage de produit.

2. Installation selon la revendication 1, caractérisée en ce qu'elle comprend un dispositif à vide (70) relié au désaérateur (11A) d'une section d'alimentation (A) communicant avec la section (B) de chauffage du produit afin de créer un vide à l'intérieur des évaporateurs (16B ; 116D, 216D ; 316D) de la section (B) de chauffage du produit et de la section (D) de concentration du produit.

3. Installation selon la revendication 1, caractérisée en ce que l'évaporateur (16B) de la section (B) de chauffage du produit et chacun des évaporateurs (116D ; 216D ; 316D) de la section (D) de concentration du produit comprennent un échangeur de chaleur (17B ; 117D ; 217D ; 317D) et un séparateur de vapeur (18B ; 118D ; 218D ; 318D).

4. Installation selon la revendication 1, caractérisée en ce que la section (B) de chauffage du produit comprend, en outre, un élément de refroidissement (31B) relié à l'évaporateur (17B) de la section (B) de chauffage du produit, afin de refroidir le produit et d'alimenter la section intermédiaire (C) en produit pré-concentré afin de raffiner le produit pré-concentré, et dans laquelle l'élément de refroidissement (31B) est également relié à un évaporateur (117D) de la section (D) de concentration du produit afin de décharger de la vapeur vers-celui afin de chauffer l'évaporateur (117D) de la section (D) de concentration du produit.

5. Installation selon la revendication 4, caractérisée en ce que l'élément de refroidissement est un séparateur de vapeur (31B).

6. Installation selon la revendication 5, caractérisée en ce que la section (B) de chauffage du produit comprend une soupape (34B) destinée à isoler l'élément de refroidissement (31B) de la section (B) de chauffage du produit.

7. Installation selon la revendication 6, caractérisée en ce qu'elle comprend, en outre, une première liaison (64) destinée à évacuer la vapeur de l'évaporateur (17B) de la section (B) de chauffage du produit vers l'évaporateur (117D) de la section (D) de concentration du produit qui a reçu, en dernier, le flux de jus.

8. Installation salon la revendication 7, caractérisée en ce que l'évaporateur (17B) de la section (B) de chauffage du produit et les évaporateurs (117D ; 217D ; 317D) de la section (D) de concentration du produit comprennent, chacun, des moyens de recirculation en circuit fermé destinés à faire recirculer le produit (19B, 20B, 21B, 24B ; 119D, 120D, 121D, 124D ; 219D, 220D, 221D, 224D ; 319D, 320D, 321D, 324D).
